# EUROPÄISCHE PATENTANMELDUNG

(11) **EP 1 106 429 A2**
(43) Veröffentlichungstag der Anmeldung: **13.06.2001**
(21) Anmeldenummer: 00126930.7
(22) Anmeldetag: 08.12.2000
(51) Int. Cl.: B60N 3/10

(54) **Halterungsvorrichtung für Behältnisse, insbesondere Getränkedosen, -flaschen oder Trinkgefässe, in Kraftfahrzeugen**

(30) Priorität: 09.12.1999 DE 19959260
(71) Anmelder: KUNSTSTOFFTECHNIK RIESSELMANN GmbH & Co. KG, 01458 Ottendorf-Okrilla (DE)
(72) Erfinder: Müller, Roland, 01458 Ottendorf-Okrilla (DE); Schupp, Steffen, 01099 Dresden (DE); Jäckel, Renée, 02692 Doberschau (DE)
(74) Vertreter: Tragsdorf, Bodo, Dipl.-Ing.

(57) **Zusammenfassung**

Die Erfindung betrifft eine Halterungsvorrichtung für Behältnisse, insbesondere Getränkedosen, -flaschen oder Trinkgefäße, in Kraftfahrzeugen.

Ausgehend von den Nachteilen des bekannten Standes der Technik soll eine Lösung geschaffen werden, die bei einer schrägen Einbaulage im Gebrauchszustand eine hohe Stabilität und Funktionssicherheit gewährleistet, über eine relativ große Aufstellfläche und Einstelltiefe für das Behältnis verfügt und für das Einstellen von im Außendurchmesser unterschiedlichen Behältnissen geeignet ist.

Hierzu wird vorgeschlagen, daß zur Ausführung der Schwenkbewegungen des Halterungsteiles 2 und des Auflagebauteiles 3 in dem Gehäuse 7 axialbeweglich ein Läufer 16 und eine Schubstange 15 in einem definierten Abstand parallel zueinander angeordnet sind und an ihren in Ausschubrichtung zeigenden Enden jeweils über eine Drehachse 11, 12 mindestens mit dem Halterungsteil 2 verbunden sind, und in einem Abstand zu diesen, an der Schubstange 15 über eine Drehachse 13 das Auflagebauteil 3 schwenkbar befestigt ist, das über eine Drehachse 14 mit dem Läufer 16 verbunden ist, an der mindestens ein Schwenkhebel 17 drehgelenkig befestigt ist, der mit einem Ende in einer Kurvenbahn 22 des Gehäuses 7 geführt ist und dessen anderes Ende mit dem Auflagebauteil 3 in Wirkungsverbindung steht.

## Beschreibung

Die Erfindung betrifft eine Halterungsvorrichtung für Behältnisse, insbesondere Getränkedosen, -flaschen oder Trinkgefäße, in Kraftfahrzeugen.

Im Automobilbau gehört es bereits zum Standard der Innenausstattung, daß entsprechende Halterungsmöglichkeiten für Behältnisse zur Aufnahme von Getränken vorgesehen sind, die den Personen im Fahrzeug während der Fahrt die Einnahme von Getränken erleichtern sollen. Aus der Praxis sind vor allem Halterungen bekannt, die im Cockpitbereich des Fahrzeuges versenkbar angeordnet sind, z.B. durch Schwenk- oder Hubbewegungen. Technischer Stand ist dabei die Steuerung des automatischen Bewegungsablaufes durch ein Triebfedersystem bei gleichzeitiger Verzögerung der Bewegung durch Silikondämpfer. In bestimmten Anwendungsfällen ist ausgehend von dem zur Verfügung stehenden Einbauraum eine schräge Einbaulage erforderlich. Eine derartige schräge Einbaulage bedeutet bei durch Hubbewegungen aus- und einfahrbaren Halterungen eine Abweichung der Hubachse in einem bestimmten Winkel von der ansonsten üblichen horizontalen Einbaulage.
Eine Halterung für einen Getränkebehälter in schräger Einbaulage ist aus der DE 195 07 614 A1 bekannt. Bei einer schrägen Einbaulage ist es erforderlich, daß im Gebrauchszustand, also im ausgefahrenen Zustand des Halters, das Bauteil mit der Öffnung zum Einstellen des Gefäßes und die dazugehörige Abstellfläche für das Gefäß eine horizontale Lage einnehmen. Um die ausgefahrenen Bauteile wieder in die Ausgangslage zu bewegen, ist es erforderlich, daß die sich in der horizontalen Lage befindlichen Bauteile vor dem Erreichen der Gehäuseöffnung in eine versenkbare Stellung gebracht werden, also zusammengeklappt sein müssen. Aus der vorgenannten Druckschrift ist eine Lösung bekannt, bei der an dem Führungsschlitten, der in einem Gehäuse schubladenartig geführt ist, seitliche Tragarme angeordnet sind, an deren freien Enden ein Halter mit Seitenwänden und einer Einstellöffnung für ein Gefäß schwenkbar gelagert ist. Die Schwenkbewegung des Halters wird über entsprechend angeordnete Torsionsfedern realisiert. An den Seitenwänden befinden sich nach innen ragende Zapfen, die in korrespondierende Langlöcher eines U-förmigen Bügels eingreifen, der als Abstellfläche für das Gefäß dient. Der Bügel bzw. die Abstellfläche und der Halter bilden somit eine Funktionseinheit. Zum Einklappen des Halters und der bügelförmigen Stütze ist ein am Schlitten schwenkbar gelagertes Rückstellglied vorgesehen, das an einer Steuerkurve der Stütze angreift und beim Einschieben des Schlittens an einer ortsfesten Schrägfläche nach unten gedrückt wird und dabei den Halter und die Stütze einklappt. Der Verlauf der Steuerkurve gewährleistet zugleich, daß das Rückstellglied den Halter in seiner horizontalen Lage verriegelt. Das Ein- und Ausfahrens des Halters zusammen mit der Stütze erfolgt durch eine Druckbetätigung der an der Frontseite des Halters befindlichen Blende. Der Nachteil dieser Lösung besteht vor allem darin, daß die eigentliche Aufstellfläche für das Gefäß in ihrer Tiefe nur als schmaler Steg ausgeführt werden kann, da die in dem Halter gelenkig gelagerte Stütze in der Einschubstellung in diesem versenkt ist. Die Tiefe bzw. Breite des Steges ist im Wesentlichen von der zur Verfügung stehenden Schachthöhe abhängig.
In der Praxis ist ein schmaler Steg als Aufstellfläche für eine sichere Halterung der Gefäße ungünstig.
Durch die drehgelenkige Verbindung zwischen dem Halter und der Stütze kann zwischen dem Rand der Einstellöffnung und der Abstellfläche, dem Steg der bügelförmigen Stütze, in der Gebrauchslage nur ein relativ geringer axialer Abstand, bezogen auf die Mittelachse des einzustellenden Gefäßes realisiert werden, es sei denn, es steht eine große Einbautiefe zur Verfügung.
Von Nachteil für die Stabilität dieser Halterung ist außerdem, daß bestimmte Funktionsbauteile sowohl translatorische als auch rotierende Bewegungen ausführen, um den Halter und die Stütze in die erforderlichen Stellungen zu bringen.
Die in dieser Druckschrift beschriebene Halterung ist außerdem nur für die Aufnahme eines Gefäßes mit einem bestimmten Durchmesser geeignet.

Der Erfindung liegt die Aufgabe zugrunde eine Halterungsvorrichtung für Behältnisse, insbesondere Getränkedosen, -flaschen oder Trinkgefäße, in Kraftfahrzeugen zu schaffen, die bei einer schrägen Einbaulage im Gebrauchszustand eine hohe Stabilität und Funktionssicherheit gewährleistet, über eine relativ große Aufstellfläche und Einstelltiefe für das Behältnis verfügt und für das Einstellen von im Außendurchmesser unterschiedlichen Behältnissen geeignet ist.

Erfindungsgemäß wird die Aufgabe durch die im Anspruch 1 angegebenen Merkmale gelöst. Weitere Ausgestaltungen sind Gegenstand der Ansprüche 2 bis 10.

Um die erforderlichen Schwenkbewegungen des Halterungsteiles und des Auflagebauteiles während der Bewegung in die Gebrauchslage oder von dieser zurück in die Ausgangslage zu erzielen, ist eine Viergelenkfunktionseinheit in Verbindung mit einem Läufer und einer Schubstange sowie einem Schwenkhebel vorgesehen, wobei während der Bewegung der Viergelenkfunktionseinheit die Abstände zwischen den einzelnen Gelenkpunkten bzw. Drehachsen unverändert bleiben. Der Schwenkhebel, der in einer definierten Kurvenbahn des Gehäuses geführt wird, bewirkt die Schwenkbewegungen des Auflagebauteiles und ist in einer in dem Läufer befindlichen gemeisamen Drehachse zusammen mit dem Auflagebauteil gelagert. Zusätzlich ist das Auflagebauteil noch in einer Drehachse der Schubstange gelagert. Die Schwenkbewegung des Halterungsteiles erfolgt über die Bewegung der Schubstange, die mit diesem Bauteil drehgelenkig verbunden ist. Die Schwenkachse bildet die drehgelenkige Verbindung des Läufers mit dem Halterungsteil bzw. der Blende oder einem weiteren Bauteil, auf dem die Blende aufgesetzt wird, das mit dem Halterungsteil verbunden ist. Diese Bauteile bilden eine Funktionseinheit. Zusätzlich kann im Bereich der Blende noch eine vertikal verschiebbare Gleitplatte angeordnet werden, die zur Steuerung einer weiteren Funktion dient.
Der Läufer und die Schubstange sind in einem definierten vertikalen Abstand parallel zueinander in der vorgegebenen schrägen Einbaulage, z.B. in einem Winkel von 30°, bezogen auf die Horizontale, angeordnet. Die so gebildete, in ihren Abständen unveränderbare Viergelenkfunktionseinheit wirkt wie ein Parallelogramm, dessen schräge Seiten die Schubstange und der Läufer bilden. Durch Parallelverschiebung dieser Seiten, wie der Relativbewegung der Schubstange zum Läufer, werden die erforderlichen Schwenkbewegungen für das Halterungsteil und das Auflagebauteil erzielt.
Da dieser Bewegungsablauf ausschließlich über Drehachsen bzw. Drehgelenke erfolgt, wird eine besonders hohe mechanische Stabilität der Halterungsvorrichtung in der Gebrauchslage erreicht. Dieses Funktionsprinzip kann sowohl für Halterungsvorrichtungen mit einer oder mit mehreren Aufnahmeöffnungen für die einzustellenden Gefäße zur Anwendung gelangen. Aus Kostengründen ist es jedoch zweckmäßig, wenn zwei Aufnahmeöffnungen nebeneinander angeordnet sind. In diesem Fall ist die Anordnung von zwei Schwenkhebeln erforderlich, die in je einer Seitenwand des Gehäuses in einer Kurvenbahn geführt werden. Der Läufer ist dabei T-förmig ausgebildet, wobei das Mittelteil in Ausschubrichtung zeigt. Das Auflagebauteil besitzt zwei synchron schwenkbare Abstellflächen. Der vorhandene Bauraum zwischen den beiden benachbarten Aufnahmeöffnungen des Halterungsteiles wird für eine mittige Anordnung des Läufers und der Schubstange genutzt. Die Bewegung des Läufers erfolgt über eine in an sich bekannter Weise angeordnete Führung in dem Gehäuse, die verschiedenartig axialbeweglich ausgeführt sein kann.
Die vorgeschlagene Konstruktion ermöglicht auch die Ausbildung relativ großer Abstellflächen für die Trinkgefäße, die Bestandteil des Auflagebauteiles sind. Dadurch wird eine sichere Halterung bzw. Ablage der Gefäße gewährleistet. Außerdem wird in der horizontalen Gebrauchslage ein großer vertikaler Abstand zwischen der Abstellfläche und der Aufnahmeöffnungen realisiert, wodurch, insbesondere bei hohen Gefäßen, wie z.B. Flaschen, deren sichere Halterung gewährleistet wird.
Hinsichtlich der Ausbildung der Aufnahmeöffnungen für die Gefäße können verschiedene Ausführungen zur Anwendung kommen. Als besonders vorteilhafte Ausgestaltung wird eine Ausführung vorgeschlagen, bei der die Aufnahmeöffnungen C-förmig ausgebildet sind und deren offener Teil durch einen unter Federspannung stehenden Klemmbügel geschlossen wird, der in verschiedenen Stellungen unterschiedlicher Öffnungsweiten verrastbar ist. Da der Klemmbügel in der Raststellung für die maximale Öffnungsweite die benachbarte Seitenwand des Gehäuses überragt, muß der Klemmbügel während der Bewegung eingeschwenkt werden. Dies erfolgt automatisch über die Betätigung der Blende im Zusammenwirken mit dem Läufer als Bestandteil der Viergelenkfunktionseinheit. Durch die Veränderung der Öffnungsweite können Behälter unterschiedlicher Außendurchmesser eingestellt werden.

Die Erfindung soll nachstehend an einem Beispiel für eine Halterungsvorrichtung in schräger Einbaulage und zum Einstellen von zwei Behältnissen unterschiedlicher Außendurchmesser erläutert werden. In der zugehörigen Zeichnung zeigen
- Fig.1: die Halterungsvorrichtung im Gebrauchszustand in perspektivischer Darstellung,
- Fig. 2: die Halterungsvorrichtung gemäß Fig.1 im geschlossenen Ausgangszustand in perspektivischer Darstellung,
- Fig. 3: eine Seitenansicht zu der Fig.1 in vereinfachter Darstellung und
- Fig. 4: die Ansicht D gemäß der Fig. 2, ohne Gehäuse und Blende.

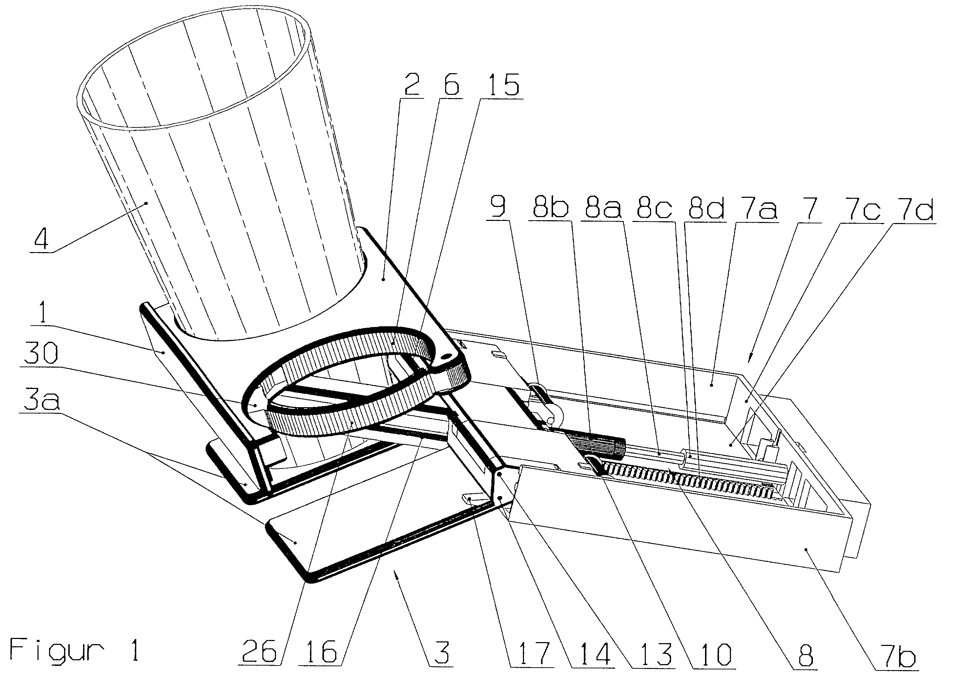

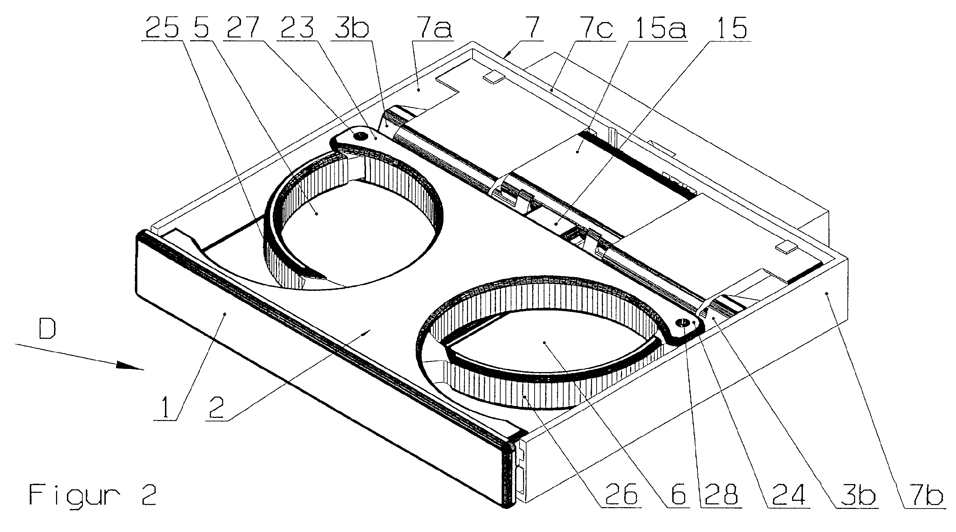

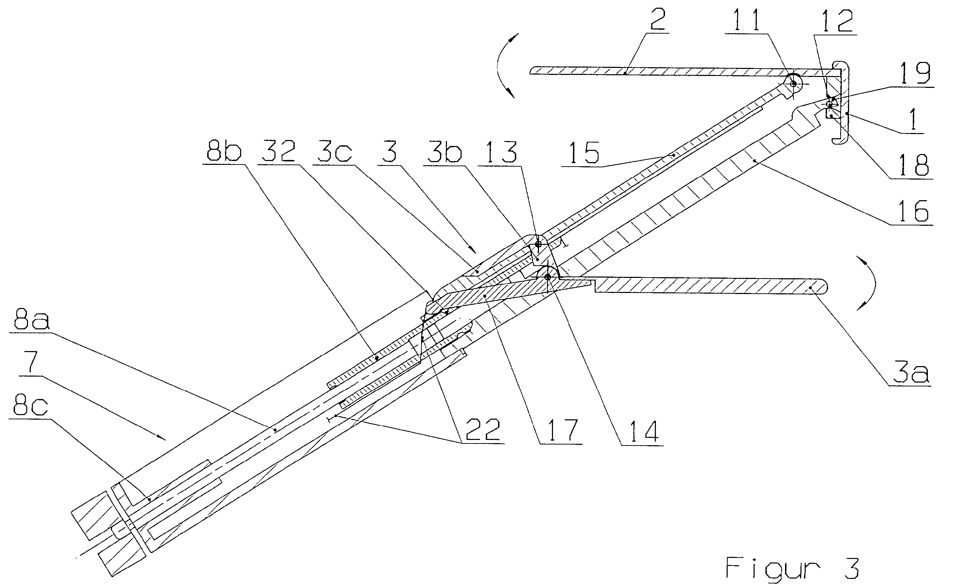

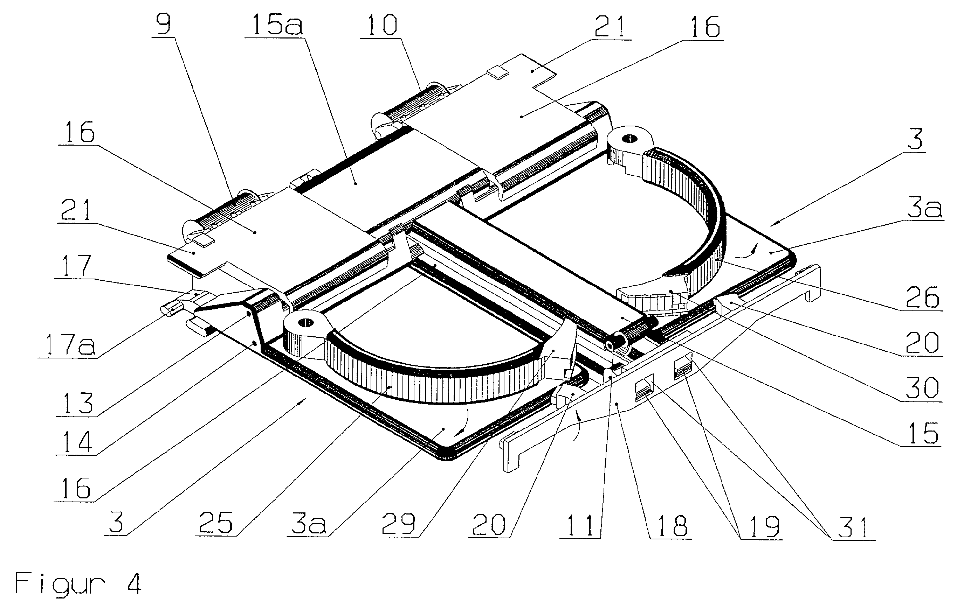

Die in den Figuren 1 bis 4 gezeigte Halterungsvorrichtung wird z.B. in einem Winkel von 30°, bezogen auf die Horizontale, in dem dafür vorgesehenen Einbauraum im Cockpit eines Kraftfahrzeuges als komplett vorgefertigtes Bauteil eingesetzt. Durch einen manuellen Druck auf die Blende 1 (Fig. 2) bewegt sich das Halterungsteil 2 zusammen mit dem Auflagebauteil 3 vom geschlossenen Ausgangszustand in die in Fig. 1 gezeigte Gebrauchslage, zum Einstellen eines Trinkgefäßes 4 in eine der beiden Aufnahmeöffnungen 5 oder 6 des Halterungsteiles 2. Die Halterungsvorrichtung besteht, wie in Fig. 1 gezeigt, aus einem Gehäuse 7, das durch zwei Seitenwände 7a und 7b, die Rückwand 7c und den Boden 7d gebildet ist. Mittig ist in diesem eine Führung 8 angeordnet, die aus einer festen Führungsstange 8a und einer axialbeweglichen Führungshülse 8b besteht, die im Ausgangszustand bis an den Anschlag 8c zurückbewegt ist. Zur Dämpfung der Hubbewegungen der Führungshülse 8b ist in an sich bekannter Bauart ein Dämpfer vorgesehen, dessen Zahnrad mit einer am Boden 7d angeordneten Zahnstange 8d kämmt. Die Hubbewegungen der Führungshülse 8b werden durch die beiden Rollfedern 9 und 10 bewirkt. Der erforderliche Bewegungsablauf zum Ausschwenken des Halterungsteiles 2 und des Auflagebauteiles 3 in die Horizontale und wieder zurück in die Ausgangslage wird im folgenden unter Bezugnahme auf die Fig. 3 erläutert. Die Realisierung der erforderlichen Schwenkbewegungen erfolgt ausschließlich durch Drehbewegungen über eine Viergelenkanordnung, die durch die Drehachsen 11, 12, 13 und 14 im Zusammenwirken mit der Schubstange 15 und dem Läufer 16 sowie dem Schwenkhebel 17 gebildet ist. Im Betriebszustand verändern sich die Abstände zwischen den einzelnen Drehachsen 11, 12, 13 und 14 nicht. Die Schubstange 15 und der Läufer 16 sind unabhängig voneinander, axialbeweglich in dem Gehäuse 7 geführt, angeordnet. Im ausgefahrenen Zustand, in der Gebrauchslage, befinden sich die hinteren Enden der Schubstange 15 und des Läufers 16 noch im Schacht des Gehäuses 7. An den in Ausschubrichtung zeigenden vorderen Enden der Schubstange 15 und des Läufers 16 sind diese über die drehgelenkigen Achsen 11 und 12 mit dem Halterungsteil 2 und dem in der Fig. 3 nicht sichtbaren vorderen Rand des Halterungsteiles 2 verbunden. Die Drehachse 12 kann auch an der Unterseite des Halterungsteiles 2 angeordnet sein. Im gezeigten Beispiel ist noch eine verschiebbare Gleitplatte 18 mit einer zusätzlichen Funktion vorgesehen, auf die noch gesondert eingegangen wird. Wie aus den Figuren 1 und 2 ersichtlich, bilden die Blende 1 und das Halterungsteil 2 sowie die Gleitplatte 18 eine Baueinheit.
In einem definierten Abstand zu der Drehachse 11 befindet sich an der Schubstange 15 eine weitere Drehachse 13, an der das Auflagebauteil 3 drehgelenkig befestigt ist. Das Auflagebauteil 3 ist außerdem noch über die Drehachse 14 mit dem Läufer 16 verbunden. Zusätzlich ist an der Drehachse 14 auch noch der Schwenkhebel 17 befestigt. Der Schwenkhebel 17 und das Auflagebauteil 3 haben somit eine gemeinsame Drehachse. Das Auflagebauteil 3 besitzt an seinem vorderen Ende eine großflächige Abstellfläche 3a und ist in seinem hinteren Teilstück mit einer ersten Abwinkelung 3b und einer zweiten Abwinkelung 3c versehen, wobei sich der Gelenkpunkt 13, die Verbindung mit der Schubstange 15 im oberen Bereich der Abwinkelung 3b befindet und der Gelenkpunkt 14, die Verbindung mit dem Läufer 16 und dem Schwenkhebel 17, im unteren Bereich. Die hintere Abwinkelung 3c ist dabei in ihren Abmessungen so dimensioniert, daß diese beim Zusammenklappen des Auflagebauteiles 3 in Richtung des Läufers 16 problemlos in dem Schacht des Gehäuses 7 versenkt werden kann. Da zwei Einstellöffnungen 5 und 6 vorgesehen sind, sind auch zwei Auflagebauteile 3 angeordnet, deren Bewegung synchron gesteuert wird. Es kann auch ein einteiliges Auflagebauteil 3 mit zwei Abstellflächen 3a eingesetzt werden. An der Drehachse 14 des Läufers 16 sind beidseitig Schwenkhebel 17 drehbeweglich gelagert (Fig. 4). Am hinteren Ende dieser Schwenkhebel 17 sind auf einer gemeinsamen Achse liegend, nach außen abstehende Zapfen 17a angeordnet, die jeweils in identischen Führungen in den Seitenwänden 7a und 7b eingreifen, die als Steuerkurve 22 ausgebildet sind. Der vordere Teil der Schwenkhebel 17 steht mit dem jeweils zugehörigen Auflagebauteil 3 in Wirkungsverbindung und löst synchron deren Schwenkbewegung beim Zusammenklappvorgang aus.
Wie in Fig. 4 gezeigt, ist die Schubstange 15 im sichtbaren Bereich mit einer entsprechenden Abdeckung 15a versehen. Seitlich befinden sich an dem Läufer 16 Anschläge 21 für die Begrenzung der Schwenkbewegung der Schwenkhebel 17.
Das Ein- und Ausschwenken des Halterungsteiles 2 und des Auflagebauteiles 3 wird somit ausschließlich durch Drehbewegungen über die in ihren Abständen unveränderbare Viergelenkanordnung erzielt. Dadurch wird eine hohe mechanische Stabilität dieser Anordnung, auch bei häufigem Gebrauch, erreicht. Da das Halterungsteil 2 und das Auflagebauteil 3 kein gemeinsames Drehgelenk aufweisen, also nicht direkt miteinander verbunden sind, ist es möglich geworden, diese Bauteile so anzuordnen, daß diese in der Gebrauchslage einen relativ großen parallelen Abstand zueinander aufweisen. Von besonderem Vorteil im Gebrauchszustand ist auch die infolge der konstruktiven Auslegung durch die Viergelenkanordnung möglich gewordene großflächige Ausbildung der Abstellflächen 3a.
Zusätzlich wurde noch eine Möglichkeit geschaffen, die Aufnahmeöffnungen 5 und 6 im Zusammenwirken mit der Viergelenkanordnung in ihrem Durchmesser veränderbar auszugestalten. Hierzu ist vorgesehen, wie in den Figuren 1 und 2 gezeigt, die beiden Aufnahmeöffnungen 5 und 6 in dem Halterungsteil 2 C-förmig auszubilden, wobei die offenen Seiten jeweils parallel zu den Seitenwänden 7a und 7b verlaufen. An den beiden in Einschubrichtung zeigenden Randabschnitten 23 und 24 des Halterungsteiles 2, die durch die C-förmigen Öffnungen gebildet sind, befinden sich im Randbereich an der Unterseite Ausnehmungen zur Aufnahme von gelenkig angeordneten Klemmbügeln 25 und 26. Die bogenförmigen Klemmbügel 25, 26 sind in Drehachsen 27 und 28 horizontal schwenkbar gelagert und werden jeweils über eine nicht gezeigte Torsionsfeder nach innen gedrückt. Die freien Enden der Klemmbügel 25, 26 sind mit einem Rastfuß 29 bzw. 30 ausgerüstet, der an der Innenseite des C-förmigen Randes zur Anlage kommt und eine nutförmige Führung mit einer Verrastung für die Nocken 20 aufweist, wie in Fig. 4 dargestellt ist. In dem in Richtung zur Blende 1 zeigenden Bereich des C-förmigen Randes befinden sich in einem definierten Abstand zueinander Aussparungen, in die die Nocken 20 eingreifen.
In der Fig. 4 sind nur zwei Nocken 20, für jede Aufnahmeöffnung 5, 6 einer, zu sehen. In Richtung nach außen ist jeweils ein weiterer Nocken angeordnet. Die Nocken 20 sind an einer an der Vorderfront angeordneten, vertikal beweglichen Gleitplatte 18 befestigt, auf die die Blende 1 aufgesetzt wird. Die Gleitplatte 18 besitzt in ihrer Vorderfront zwei benachbarte Führungen 31, in die je eine Lasche 19 eingreift, die Bestandteil des freien Endes der Läufer 8 sind, deren Drehachse 12 sich am unteren Rand des Halterungsteiles 2 befindet, wie bereits unter Bezugnahme auf die Figur 3 erläutert. Die Klemmbügel 25 und 26 befinden sich in ihrer Ausgangslage in der in der Figur 2 gezeigten Stellung, in einer sogenannten Vorraststellung für Gefäße mit einem kleinen Außendurchmesser. Zum Einstellen von Gefäßen mit einem größeren Außendurchmesser wird der betreffende Klemmbügel 25 oder 26 von Hand nach außen gezogen und verrastet mit dem jeweiligen Nocken 20. In dem gezeigten Beispiel sind drei verschiedene Öffnungsweiten der Aufnahmeöffnungen 5 und 6 für die einzustellenden Gefäße möglich. In der Stellung der größten Öffnungsweite überragt der Klemmbügel sogar die benachbarte Seitenwand des Gehäuses 7. Infolge der Drehfederbelastung der Klemmbügel 25 und 26 entsteht ein Haltemoment für das einzustellende Gefäß. Die Klemmbügel bestehen aus einem stabilen elastischen Kunststoffmaterial.
In der Gebrauchslage können die Klemmbügel manuell in die jeweils gewünschte Raststellung gebracht werden. Beim Zusammenfahren der Halterungsvorrichtung in die Ausgangslage werden die Klemmbügel 25 und 26 automatisch in die Vorrasteinstellung, die für die kleinste Öffnungsweite, bewegt. Durch einen entsprechenden Druck auf die Blende 1 schwenkt das Halterungsteil 2 um die Drehachse 11 nach unten, in Richtung zur Schubstange 15, und die beiden Abstellflächen 3a um die Drehachse 14 nach oben, in Richtung zum Läufer 16. Dabei bewegt sich die Schubstange 15 relativ zum Läufer 16 in Schachtrichtung des Gehäuses 7. Das Halterungsteil 2 und das Auflagebauteil 3 werden dadurch auf Schachthöhe zusammengeklappt. Während dieser Klappbewegung wird die Gleitplatte 18 über die Laschen 19 des Läufers 16 nach unten gedrückt, wodurch die Rastnocken 20 die Klemmbügel 25 und 26 freigeben, die infolge der Drehfederbelastung in die sogenannte Vorraststellung geschwenkt werden. Diese Bewegungsablauf ist so gesteuert, daß sich die Klemmbügel 25, 26 vor dem Erreichen des Gehäuseschachtes in der Vorraststellung befinden.

Um eine absolut sichere Stellung der ausgeschwenkten Bauteile, des Halterungsteiles 2 und des Auflagebauteiles 3, in der Gebrauchslage zu gewährleisten, kann zwischen dem Läufer 16 und der Schubstange 15 noch eine Feststellung realisiert werden.
Aus sicherheitstechnischen Gründen ist es erforderlich, dafür zu sorgen, daß beim sogenannten "Crash" von Kraftfahrzeugen die Verletzungsgefahr für die Fahrzeuginsassen minimiert wird. Diese Anforderungen werden auch an die eingebauten Halterungsvorrichtungen gestellt. Hierzu ist, wie in Fig. 3 gezeigt, als Maßnahme vorgesehen, daß die Führungshülse 8b unmittelbar an der in Gebrauchslage aus dem Gehäuse 7 ragenden Stelle mit einer Sollbruchstelle 32 in Form einer umlaufenden Nut versehen ist. Bei einem möglichen "Crash" des Fahrzeuges kommt es an dieser Stelle zu einem definierten Bruch der Führungshülse 8b und der gesamte Läufer 16 mit den in Auszugsrichtung nachfolgenden Bauteilen wird aus dem Gehäuse 7 herausgehebelt. Dadurch wird eine Verletzungsgefahr durch die Halterungsvorrichtung bei einem Unfall ausgeschlossen.

## Patentansprüche

1. Halterungsvorrichtung für Behältnisse, insbesondere Getränkedosen, -flaschen oder Trinkgefäße, in Kraftfahrzeugen, bestehend aus einem Halterungsteil mit mindestens einer Öffnung zur Aufnahme der zu haltenden Behältnisse sowie mindestens einem als Abstellfläche für die Behältnisse dienendem Auflagebauteil, die in einer schrägen Einbaulage in einem Gehäuse mittels einer Führung versenkbar angeordnet sind, wobei im ausgefahrenen Gebrauchszustand das Halterungsteil und die Abstellfläche in einem parallelen Abstand zueinander in eine horizontale Lage schwenkbar und zusammenklappbar angeordnet sind, dadurch gekennzeichnet, daß zur Ausführung der Schwenkbewegungen des Halterungsteiles (2) und des Auflagebauteiles (3) in dem Gehäuse (7) axialbeweglich ein Läufer (16) und eine Schubstange (15) in einem definierten Abstand parallel zueinander angeordnet sind und an ihren in Ausschubrichtung zeigenden Enden jeweils über ein Drehgelenk oder eine Drehachse (11, 12) mindestens mit dem Halterungsteil (2) verbunden sind, und in einem Abstand zu diesen, an der Schubstange (15) über ein Drehgelenk oder eine Drehachse (13) das Auflagebauteil (3) schwenkbar befestigt ist, das über ein weiteres Drehgelenk oder eine Drehachse (14) mit dem Läufer (16) verbunden ist, wobei an diesem Drehgelenk oder dieser Drehachse (14) zusätzlich noch mindestens ein Schwenkhebel (17) drehgelenkig befestigt ist, der mit einem Ende in einer Kurvenbahn (22) des Gehäuses (7) geführt ist und dessen anderes Ende mit dem Auflagebauteil (3) in Wirkungsverbindung steht, die einzelnen Drehgelenke oder Drehachsen (11, 12, 13, 14) eine in ihren Abständen unveränderbare Viergelenkfunktionseinheit bilden, und die Bewegung des Läufers (16) über die auf der Führungsstange (8a) beweglich angeordnete Führungshülse (8b) der in dem Gehäuse (7) befindlichen Führung (8) erfolgt.

2. Halterungsvorrichtung nach Anspruch 1, dadurch gekennzeichnet, daß der Läufer (16) als T-förmiges Bauteil ausgebildet ist, das an den beiden rechtwinklig von dem Mittelteil abstehenden Seitenteilen seitlich vorstehende Anschläge (21) zur Begrenzung der Schwenkbewegung der Schwenkhebel (17) aufweist und benachbart zu dem Mittelteil jeweils eine Aufnahmeöffnung (5, 6) für das abzustellende Behältnis (4) angeordnet ist.

3. Halterungsvorrichtung nach einem der Ansprüche 1 oder 2, dadurch gekennzeichnet, daß die Schubstange (15) oberhalb des Läufers (16) angeordnet ist.

4. Halterungsvorrichtung nach einem der Ansprüche 1 bis 3, dadurch gekennzeichnet, daß das Auflagebauteil (3) aus zwei synchron schwenkbaren Abstellflächen (3a) und zwei sich im Ausgangszustand in Einschubrichtung erstreckenden Abwinkelungen (3b, 3c) besteht, wobei sich in der ersten Abwinkelung (3b), im unteren Bereich die gemeinsame Drehachse (14) für das Auflagebauteil (3) und die Schwenkhebel (17) befindet und im oberen Bereich die Drehachse (13) für die Verbindung mit der Schubstange (15), und die zweite Abwinkelung (3c) in Richtung zum Boden (7d) des Gehäuses (7) zeigt, und der Abstand zwischen der Unterseite der Abstellfläche (3a) und dem Scheitelpunkt der Abwinkelungen (3b, 3c) kleiner ist als die Schachthöhe des Gehäuses (7).

5. Halterungsvorrichtung nach einem der Ansprüche 1 bis 4, dadurch gekennzeichnet, daß die Schwenkhebel (17), bezogen auf ihre Drehachse (14), einen langen und einen kurzen Hebelarm aufweisen, und zur Führung in den Seitenwänden (7a, 7b) des Gehäuses (7) am Ende des in Einschubrichtung zeigenden langen Hebelarmes jeweils einen seitlich nach außen ragenden Zapfen (17a) aufweisen, und der in entgegengesetzter Richtung zu dem langen Hebelarm zeigende kurze Hebelarm an der Unterseite der Abstellfläche (3a) des Auflagebauteiles (3) anliegt, wobei die beiden Drehachsen (13, 14) des Auflagebauteiles (3) entweder auf einer gemeinsamen vertikalen Linie liegen oder nur geringfügig von dieser abweichen.

6. Halterungsvorrichtung nach einem der Ansprüche 1 bis 5, dadurch gekennzeichnet, daß das Halterungsteil (2) an seiner Vorderfront einen nach unten abstehenden Rand aufweist, an dem eine verschiebbare Gleitplatte (18) angeordnet ist, wobei eine Blende (1) entweder an dem Halterungsteil (2) befestigt oder auf die Gleitplatte (18) aufgesetzt ist, und sich das endseitige Drehgelenk (12) des Läufers an dem Halterungsteil (2) oder der Blende (1) befindet.

7. Halterungsvorrichtung nach einem der Ansprüche 1 bis 6, dadurch gekennzeichnet, daß das Halterungsteil (2) zur Aufnahme der Behältnisse (4) zwei C-förmige Aufnahmeöffnungen (5, 6) aufweist, deren Öffnungsweite durch an dem Halterungsteil (2) drehgelenkig befestigte, federbelastete Klemmbügel (25, 26) in verschiedenen Stellungen verrastend einstellbar ist.

8. Halterungsvorrichtung nach einem der Ansprüche 1 bis 7, dadurch gekennzeichnet, daß an den freien Enden der Klemmbügel (25, 26) Rastfüße (29, 30) angeordnet sind, die an der Innenseite des die jeweilige C-förmige Aufnahmeöffnung (5, 6) begrenzenden Randes anliegen und eine verrastbare Führung aufweisen, in die Nocken (20) eingreifen, die an der Gleitplatte (18) befestigt sind und durch in dem Rand befindliche Öffnungen ragen.

9. Halterungsvorrichtung nach einem der Ansprüche 1 bis 8, dadurch gekennzeichnet, daß das in Ausschubrichtung zeigende Ende des Läufers (16) mit der Gleitplatte (18) verbunden ist und der Läufer (16) über vorstehende Laschen (19) mit der Gleitplatte (18) in Verbindung steht und diese dadurch in vertikaler Richtung selbsttätig bewegbar ist, um die Verrastung der Klemmbügel (25, 26) freizugeben.

10. Halterungsvorrichtung nach einem der Ansprüche 1 bis 9, dadurch gekennzeichnet, daß die Führungshülse (8b) eine Sollbruchstelle (32) aufweist, die sich in Gebrauchslage außerhalb der Schachtöffnung des Gehäuses (7), in einem geringen Abstand zu dieser, befindet.
